# EUROPEAN PATENT SPECIFICATION

(11) **EP 2 671 696 B1**
(45) Date of publication and mention of the grant of the patent: **16.12.2015**
(21) Application number: 12397517.9
(22) Date of filing: 07.06.2012
(51) Int. Cl.: B32B 37/12, B27D 1/08

(54) **Layered structure having non-uniform thickness and method for producing the same**
Geschichtete Struktur mit ungleichmäßiger Dicke und Verfahren zur deren Herstellung
Structure en couches présentant une épaisseur non uniforme et procédé pour sa production

(43) Date of publication of application: 11.12.2013
(73) Proprietor: UPM-Kymmene Wood Oy, 15140 Lahti (FI)
(72) Inventor: Tilli, Mikko, 15870 Hollola (FI); Liimatainen, Juhana, 54800 Savitaipale (FI); Rinne, Kimmo, 15950 Lahti (FI)
(74) Representative: Tampereen Patenttitoimisto Oy

(56) References cited:
- FR-A- 960 548
- GB-A- 556 282
- US-A- 2 477 375
- US-A- 2 499 959

## Description

### Field of the Invention

The invention relates to a method for producing a bent layered product having a non-uniform thickness. The invention further relates to a layered product having a non-uniform thickness and a finite radius of curvature. The invention further relates to an intermediate product having a layered structure and a non-uniform thickness. The invention further relates to device for pressing an intermediate layered product having a non-uniform thickness. Such layered products may be used in furniture. Other applications include glasses.

### Background of the Invention

Original designs often comprise parts that have a curvilinear shape and that have a non-uniform thickness. Moreover, furniture, protective packaging, decorative panels, commercial stands, and other visually attractive products may require parts that have a curvilinear shape and that have a non-uniform thickness. If a visually attractive appearance is needed, also the surface of such object should be visually attractive.

A curvilinear product is known, for instance, from patent US 2,477,375.

Planar objects are often easier and faster to manufacture, handle, and machine than objects that have a curvilinear shape.

### Summary of the Invention

A method for producing a curvilinear layered product as well as a product according to the invention are defined respectively in claim 1 and claim 8, together with their dependent claims.

### Description of the Drawings

- Figure 1a: shows, in a perspective view, a preform,
- Figure 1b: shows, in a side view, a preform,
- Figure 1c: shows, in a side view, a preform,
- Figure 2a: shows, in a side view, a preform,
- Figure 2b: shows, in a side view, form pressing of the preform of figure 2a,
- Figure 2c: shows, in a side view, the form pressed preform of figure 2a,
- Figure 2d: shows, in a side view, a curvilinear intermediate product, wherein the intermediate product is produced from the preform of figure 2c by the removal of material,
- Figure 3a: shows, in a side view, an intermediate product, wherein the intermediate product is produced from the preform of figure 2a by the removal of material,
- Figure 3b: shows, in a side view, form pressing of the intermediate product of figure 3a,

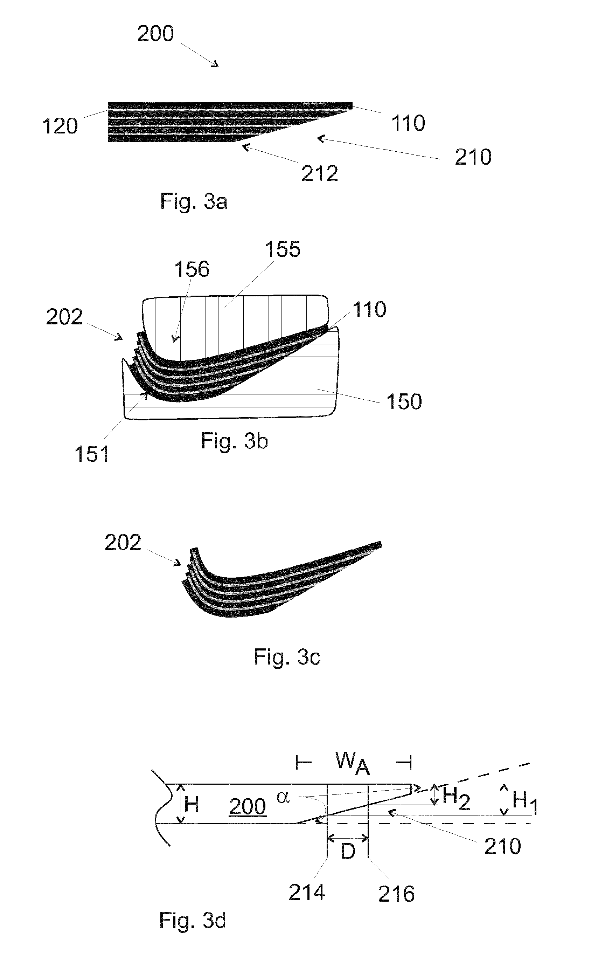

- Figure 3b: shows, in a side view, form pressing of the intermediate product of figure 3a,
- Figure 3c: shows, in a side view, a curvilinear intermediate product produced from the intermediate product of figure 3a by form pressing,
- Figure 3d: shows, in a side view, some measures of an intermediate product,

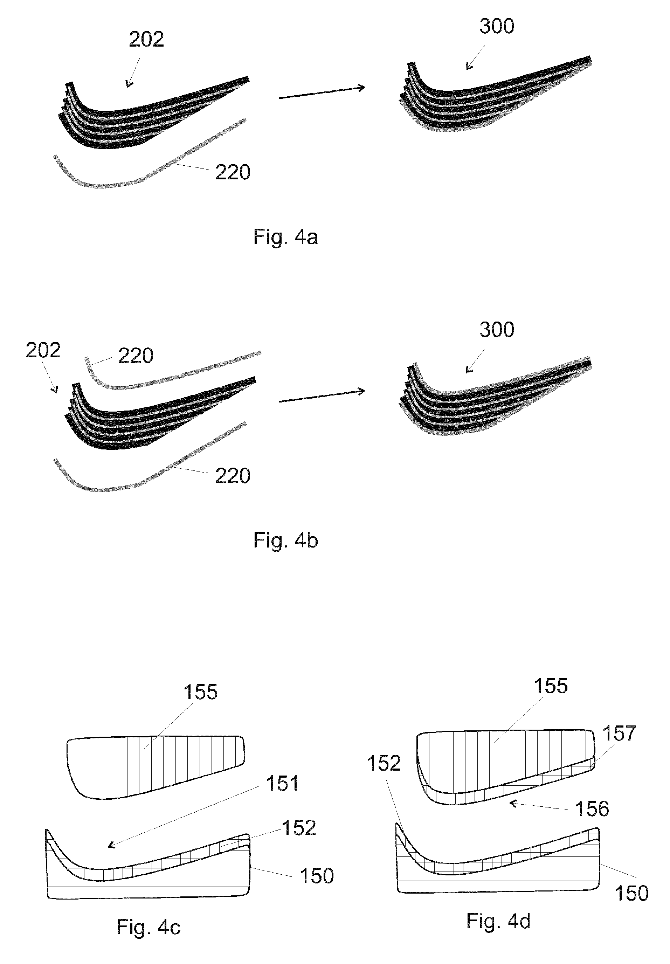

- Figure 4a: shows, in a side view, arranging a surface layer onto a curvilinear intermediate product,
- Figure 4b: shows, in a side view, arranging two surface layers onto a curvilinear intermediate product,
- Figure 4c: shows, in a side view, a device for form pressing an intermediate product,
- Figure 4d: shows, in a side view, a device for form pressing an intermediate product,

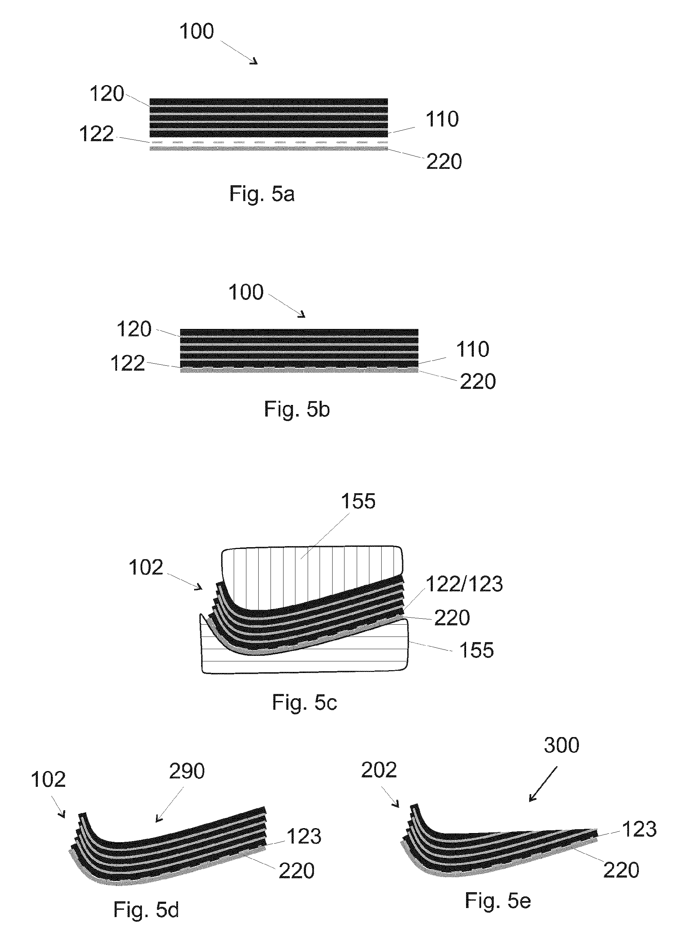

- Figure 5a: shows, in a side view, a preform, a surface layer, and a layer of thermoplastic material,
- Figure 5b: shows, in a side view, a preform onto which a surface layer and a layer of thermoplastic material have been pre-attached,
- Figure 5c: shows, in a side view, form pressing the preform and surface layer of figure 5a or 5b at the same time,
- Figure 5d: shows, in a side view, a curvilinear preform having been coated with a surface layer, as the result of the process of figure 5c,
- Figure 5e: shows, in a side view, a product, wherein the product is produced from the preform of figure 5d by the removal of material,

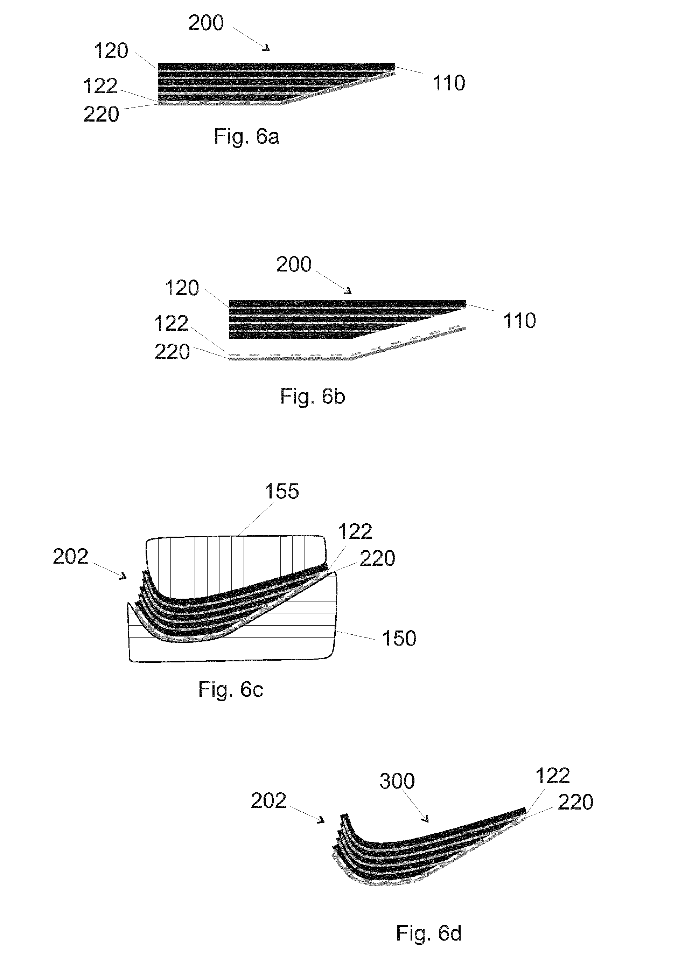

- Figure 6a: shows, in a side view, an intermediate product onto which a surface layer and a layer of thermoplastic material have been pre-attached,
- Figure 6b: shows, in a side view, an intermediate product, a surface layer and a layer of thermoplastic material,
- Figure 6c: shows, in a side view, form pressing the intermediate product and surface layer of figure 6a or 6b at the same time,
- Figure 6d: shows, in a side view, the product obtained by the process of figure 6c,

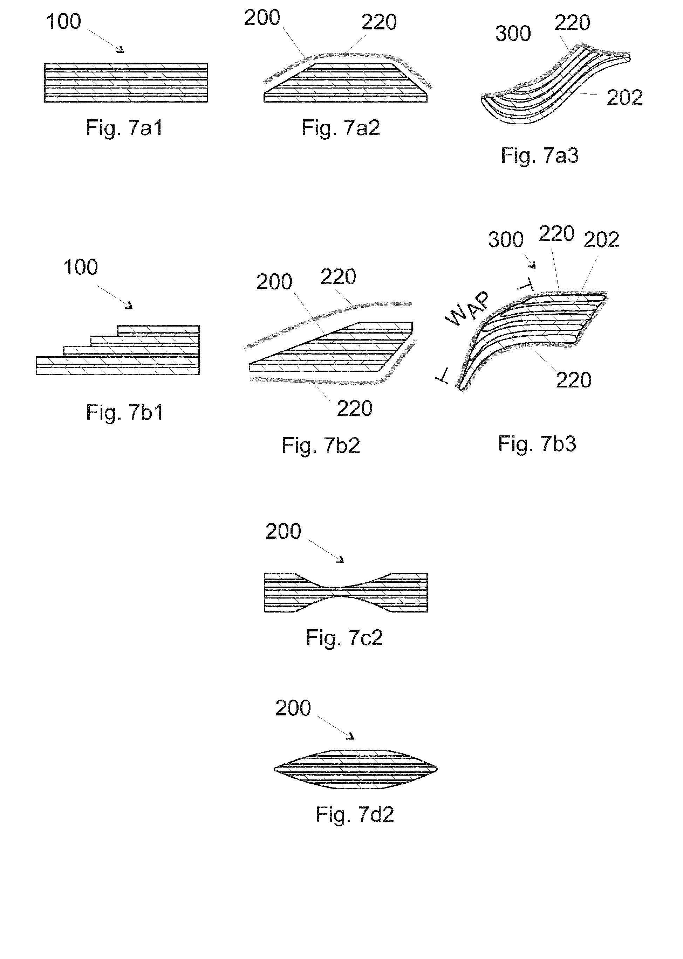

- Figures 7a1 and 7b1: show, in side views, examples of preforms,
- Figures 7a2, 7b2, 7c2, and 7d2: show, in side views, examples of intermediate products,
- Figures 7a3 and 7b3: show, in side views, examples of products,

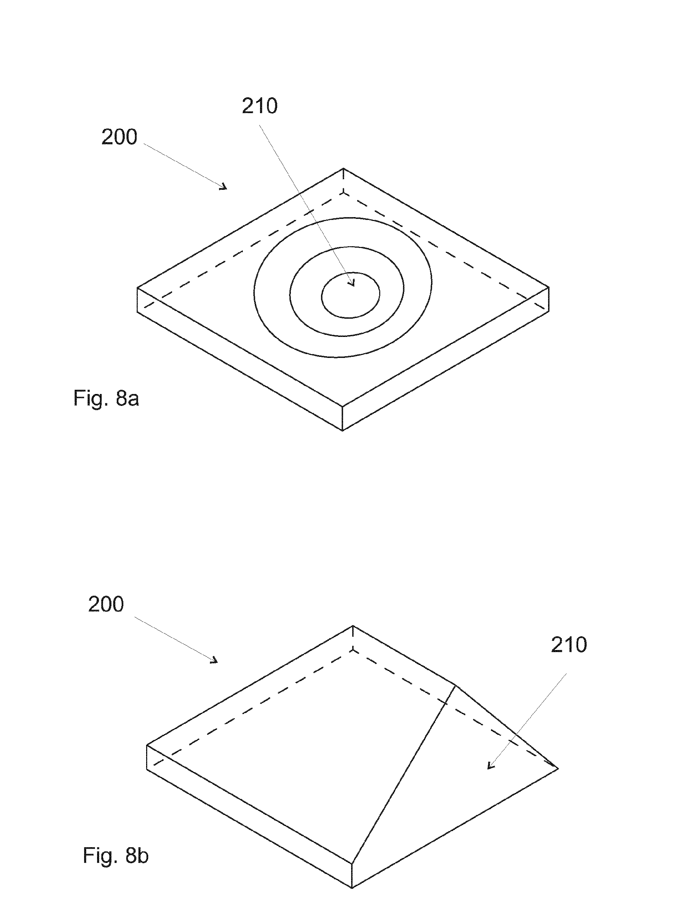

- Figure 8a and 8b: show, in perspective views, examples of intermediate products,

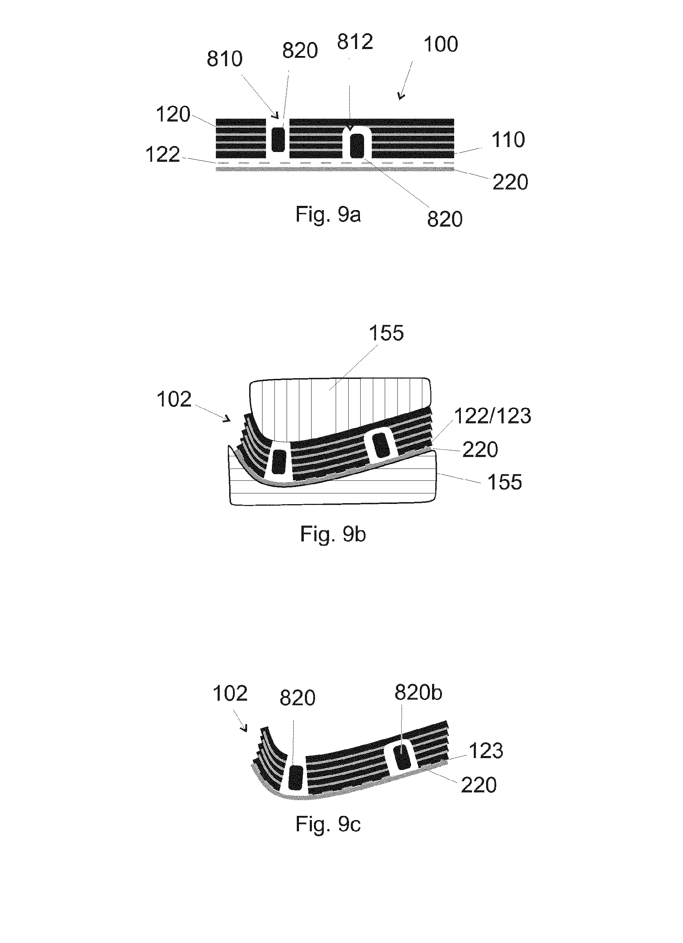

- Figure 9a: shows, in a side view, a preform comprising a hole and equipment arranged in the hole,
- Figure 9b: shows, in a side view, form pressing the preform of Fig. 9a,
- Figure 9c: shows, in a side view, a product obtained by the form pressing shown in Fig. 9b,

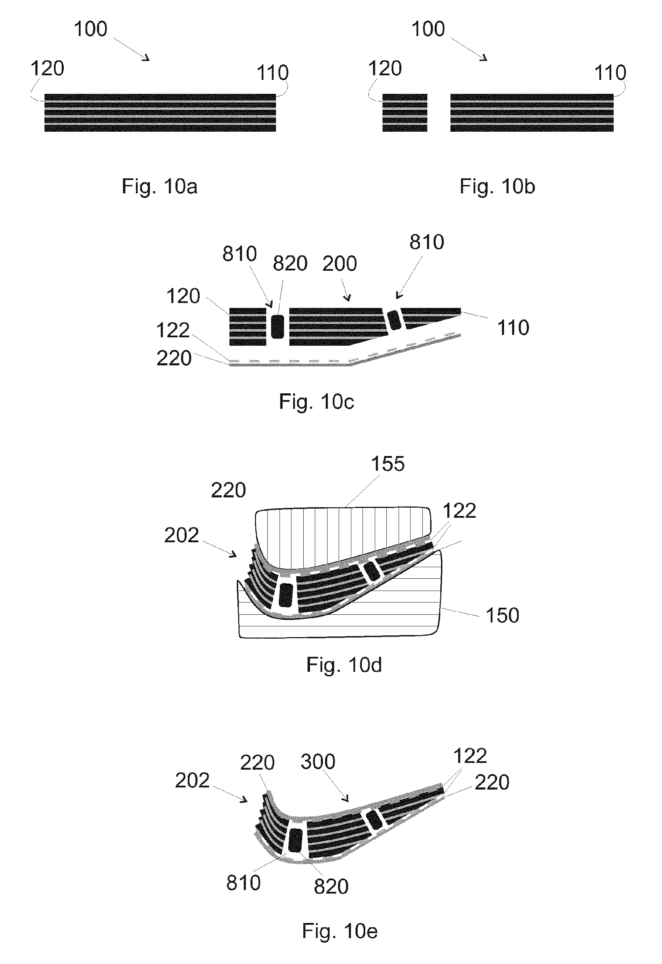

- Figure 10a: shows, in a side view, a preform,
- Figure 10b: shows, in a side view, a preform comprising a hole, having been made from the preform of Fig 10a,
- Figure 10c: shows, in a side view, an intermediate product having been made from the preform of Fig 10b, comprising a hole and equipment arranged in the hole,
- Figure 10d: shows, in a side view, form pressing the intermediate product of Fig. 10c, and
- Figure 10e: shows, in a side view, a product obtained by the form pressing shown in Fig. 10d,

### Detailed Description of the Invention

A purpose of the present invention is to provide a method by which a product that has a curvilinear shape and that has a non-uniform thickness can efficiently be manufactured.

It has been noticed that planar layers that are relatively thin may be bendable even if a thick planar objects of the same material a not bendable, e.g. break under bending, or require excessive force to bend. According to an aspect of the invention, the product of the process comprises planar layers of material. The product is made using a preform or and intermediate product. The intermediate product is made using the preform.

It has been noticed that a single preform is more easily workable than individual layers of the preform. Thus, according to an aspect of the invention, the layers of the preform are attached to each other before working, to facilitate machining of the preform. However, to facilitate bending of the preform or an intermediate product, the layers are attached to each other using thermoplastic material. When the preform or the intermediate product is heated, the thermoplastic material melts, or at least partly loses its rigidity. After losing its rigidity, the preform or the intermediate product can be form pressed (or otherwise bended) to required shape, since the melted thermoplastic allows the thin layers of the preform or intermediate product to slide relative to each other enabling bending of the preform or the intermediate product, as discussed below.

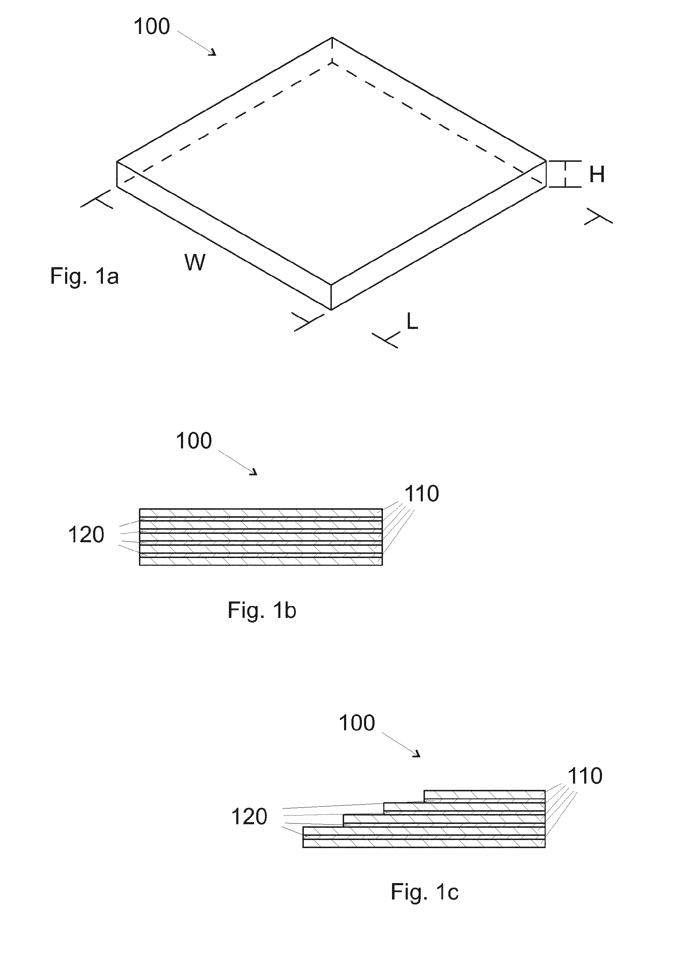

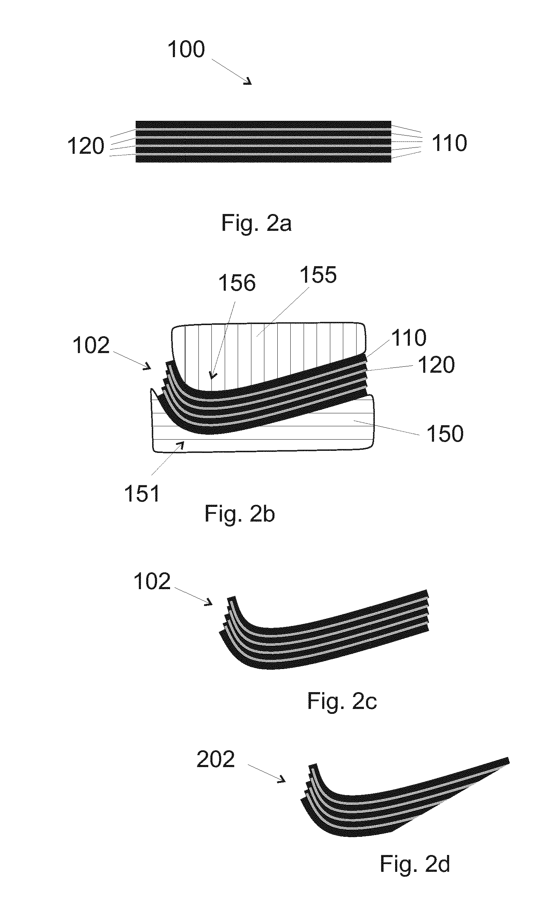

It is known that the flexural stiffness of an object in general depends on the thickness as H³, wherein H is the thickness. Thus, the flexural stiffness of a preform 100 (Fig. 2a) or an intermediate product 200 (Fig. 3a) is also proportional to H³, wherein H is the thickness of the preform 100 or the intermediate product 200. Thus, thick objects are stiff and hard to bend. The problem of stiff objects has been solved by using a preform 100 or an intermediate product 200, wherein the preform 100 or the intermediate product 200 comprises multiple (say N) layers, each having the thickness of (H/N). Thus the flexural stiffness of the pile of layers is only N(H/N)³. This applies, when the layers can slide with respect to each other, i.e. when the material in between the layers allow for sliding. The material in between the layer may comprise thermoplastic material. The thermoplastic material allows for sliding e.g. when the temperature of the thermoplastic is above the melting point.. Therefore, the layered preform 100 or the layered intermediate product 200 is much more flexible than a uniform board of a material, especially above the melting point of the thermoplastic material. The material of the layers 110 of the preform 100 or the intermediate product 200 have a higher melting point or softening point than the thermoplastic material 120 (cf. Fig. 1b).

After cooling down the object, the thermoplastic material hardens, and the object re-gains its rigidity. Alternatively, some thermoplastic materials start to cross-link in elevated temperature, e.g. during form pressing, whereby the thermoplastic material may become at least partly cross-linked thermoset material during form pressing. In this case cooling is not required for the form pressed preform, intermediate product, or product to gain its rigidity. At least partly thermoset resin (at least partly cross-linked resin) is an example of this kind of material. Moreover, only partly cross-linked resin is another example of this kind of material

In the following the term "form pressing" refers to the process, wherein the preform or the intermediate product is pressed to a form in between two surfaces. The term "preform" 100 (Figs. 1a, 1b, 1c, 2a) refers to an object comprising at least two layers 110 of material (not necessarily the same material), wherein the layers are attached to each other using thermoplastic material 120. The term "intermediate product" 200 (Fig. 3a) refers to a preform 100, from which material is removed.

The invention is related to a product or an intermediate product having a non-uniform thickness. According to an aspect of the invention, the non-uniform thickness is obtained by removing material from a preform 100 having the layered structure or from an intermediate product 200 having the layered structure. Material may be removed by machining, e.g. by at least one of grinding, rubbing, cutting, sanding, surfacing, smoothening, sawing, and milling. Material may be removed before form pressing, e.g. when the object has a planar form. Alternatively, or in addition, material may be removed after form pressing, e.g. when the object has a curvilinear shape.

The invention is also related to a product having a visually attractive appearance. Therefore, a surface layer may be arranged to the preform, a pressed preform, the intermediate product, or a pressed intermediate product. In particular, if material is removed from the preform (either planar or non-planar), resulting in an intermediate product, the non-uniform thickness of the intermediate product may reveal different layers, and traces of removal of material may show on the intermediate product. An opaque surface layer may be attached to the intermediate product to cover these locations. In general a surface layer may be used to protect an object from environmental stress such as moisture, or scratching, or to improve the visual appearance. In general, the surface layer may be transparent or opaque, and may be attached or otherwise arranged (e.g. sprayed or brushed) on the intermediate product.

According to an embodiment of the invention, the surface layer is attached to the intermediate product. According to an embodiment of the invention, the surface layer is attached to the intermediate product with thermoplastic material during form pressing process. In the form pressing process the surface layer and the intermediate product may be pressed to a form at substantially the same time.

Referring to Figs. 1a-1c, a "preform" 100 is an object comprising at least two layers 110 of material. The layers 110 attached to each other using thermoplastic material 120. In Fig. 1b, the preform 100 has an essentially uniform thickness. Alternatively, as shown in Fig. 1c, the preform 100 may comprise layers 110 having different sizes, whereby the preform 100 may have a non-uniform thickness. The preform may be planar, i.e. have an infinite radius of curvature, or it may be curvilinear, i.e. having a finite radius of curvature in at least at some point. The radius of curvature refers to the radius of curvature of a layer 110; a preform having a non-uniform thickness may also be planar. Figs. 1a-1c show examples of a planar preform 100. A preform may be made by attaching some material to such a preform as discussed above. For example, to preforms may be attached together to make up a preform.

Fig. 1a shows, in a perspective view, a preform 100. The preform of the figure has a width W, a length L, and a thickness H. These measures will be discussed in more detail later. Fig. 1b shows, in a side view, the preform 100 of Fig. 1a. The layers 110 of the preform 100 are shown. The thermoplastic material 120 in between the layers 110 is also shown. The preform 100 comprises five layers 110. Also Fig. 1c shows, in a side view, a preform 100. The preform comprises five layers 110. However, the length of three topmost layers 110 is smaller than the length of the bottommost two layers 110. Thereby the thickness of the preform 100 of Fig. 1c is non-uniform. As the thickness is non-uniform, the preform 100 has a first thickness at a first location (on the right hand side in the Fig. 1c) and a second thickness at a second location (on the left hand side in the Fig. 1 c).

Fig 2a shows another preform 100. In the method, material is removed from the preform 100 to produce an intermediate product 200 (Fig. 3a; cf. also Fig. 2a). In the method, the preform 100 or the intermediate product 200 is form pressed. These steps may be done in either order. In case a preform 100 is form pressed before removing material from the preform 100, the results is referred to as a "curvilinear preform" 102.

At least one layer 110 of the preform may comprise at least one of glass, metal, fiberglass, carbon fibers, natural fibres, and polymer material.

The properties, e.g. the opaqueness or the flexibility of the layers 110 may be selected according to the preferred use. For example, if a transparent object is required, the layers 110 may transparent, e.g. polymer or glass. Transparent polymers include e.g. some acrylates and carbonates. For example, a safety glass, when properly thinned and bent (e.g. form pressed) may appear much thinner as it truly is. Therefore, safety glass with non-uniform thickness is one potential application of the invention.

Moreover, if strength, light weight an recyclability are required, the layers 110 may comprise natural fibers, e.g. in the form of wood or paper. All the layers 110 are not necessarily of the same material. At least one layer 110 may comprise at least one of natural fibers, glass, and polymer material.

In a preferred embodiment, at least one layer 110 of the preform 100 comprises organic natural fibers. In a preferred embodiment, at least one layer 110 of the preform 100 comprises wood. The thickness of the layer that comprises wood may be from 0.2 mm to 5 mm. Layers of other materials may have different thickness. Some brittle materials, e.g. glass, are flexible if they are thin. For example some glasses become flexible at the thickness of around 100 µm. In general, the thickness of a layer may be from 10 µm to 5 mm.

The layer 110 that comprises wood may have been manufactured by one of rotary cutting, flat slicing, quarter slicing, half-round slicing, and rift cutting. These methods are known as such in plywood manufacturing, and different methods result in a slightly different visual appearance of the layer. Rotary cutting may also be referred to as turning or rotary turning. In an embodiment, the layer that comprises wood has been manufactured by rotary cutting. The layers of plywood may be referred to as veneers. A layer 110 comprising fibrous material may have a fiber orientation in the plane 110 comprising the fibrous material. In this way, the layer is easily flexible in at least one direction, e.g. the direction perpendicular to the fiber orientation, whereby the fiber orientation is parallel to the bending axis. This is particularly true for a layer 110 comprising wood, e.g. a wooden veneer.

In an embodiment, the preform 100 comprises plywood. In an embodiment, the preform 100 comprises plywood that comprises thermoplastic adhesive. In an embodiment, the plywood comprises at least three layers 110 that comprise wood. In an embodiment, the preform is a plywood panel. The preform may comprise also 3D veneers, which will be discussed later in connection with a surface layer.

The number of layers 110 in the preform 100 is preferably at least three. In this context, the thermoplastic material 120 in between the layers is not considered a layer 110. More preferably, the number of layers 110 may be e.g. at least 5, at least 7, at least 9, at least 11, at least 13, at least 15, or at least 17. In case the layers comprise anisotropic material, such as wood, paper, fiberglass or other fibrous material, the number of layers is preferably odd (i.e. 2N+1, wherein N is an integer). Moreover, the mutual orientation of adjacent layers is in this case is preferably 90 degrees rotated, wherein the orientation of the layer is characterized by the material properties. For example, in plywood the anisotropic layers (veneers) comprising wood are such oriented, and the number of layers is typically odd. The number of layers may be even, e.g. when layers 110 of the preform 100 comprises, alternatively or in addition to wood, other material or materials. E.g. in a fibrous material the orientation of the layer is characterized by the orientation of the fibers. Thus the fiber orientation of a layer may be essentially perpendicular to the fiber orientation of an adjacent layer.

Preferably many of the layers 110 comprise wood. The preform 100 may comprise layers 110 that comprise wood and layers that do not comprise wood. The number of layers 110 that comprise wood may be more than 50 % (half) of the number of the layers 110 of the preform 110. In this aspect, the thermoplastic layers 120 are not considered layers 110. Preferably the number of layers 110 that comprise wood is more than 70%, and more preferably more than 90 % of the number of the layers 110 of the preform 110.

The total thickness, H (Fig. 1a), of the preform 100 is preferably at most 100 mm to facilitate form pressing on the preform 100 or the intermediate product 200. More preferably the thickness is at most 50 mm, and even more preferably the thickness is at most 20 mm.

Referring to Fig. 1a, the length L of the preform 100 may be more than the thickness H of the preform. In an embodiment the length L is at least five times the thickness H. In an embodiment the length L is at least ten times the thickness H. Referring to Fig. 1a, the width W of the preform 100 may be more than the thickness H of the preform. In an embodiment the width W is at least five times the thickness H. In an embodiment the width W is at least ten times the thickness H. For sake of clarity, the "length" and the "width" may be selected such the length is greater or equal to width. Preferably the length L of the preform is at most 3000 mm. Preferably the width W of the preform 100 is at most 1500 mm. These measures apply also to the intermediate product 200. Thus, the surface area of the preform 100 or the intermediate product 200 is preferably at most 4.5 m².

However, the product 300 is curvilinear. Therefore these measures in the product need to be measured along a surface on the product 300. Preferably the length L of the product 300, when measured along a surface of the product 300, is at most 3000 mm. Preferably the length W of the product 300, when measured along a surface of the product 300, is at most 1500 mm. The surface area changes only negligible in form press process. Therefore, the surface area of the product 300 is preferably at most 4.5 m².

However, a preferred embodiment of the method is applied to form structural material for furniture and construction. Such structural material needs to have sufficient strength for the purpose. Therefore, preferably the total thickness of the preform 100 is at least 2 mm, or more preferably at least 3 mm.

The material of the layers 110 of the preform 100 have a higher melting point (temperature) than the thermoplastic 120 material of the preform.

The thermoplastic material 120 may comprise at least one of polyolefin, lignin, polyvinyl alcohol, polyethylene, polypropylene, polyester resin, phenol resin, epoxy resin, urea-formaldehyde resin, melamine resin, acrylics and polycarbonates. It is noted that e.g. polyethylene, polypropylene, and copolymers comprising ethylenes and propylenes are polyolefins. Some of these materials may be processed, e.g. in a high temperature, by cross-linking, to form at least partially thermoset material. However, in the preform 100 and in the intermediate product 200, the material is in its thermoplastic form.

Materials that are in thermoplastic form before and after form pressing may include polyolefin, lignin, polyethylene, and copolymers thereof. In an embodiment, the thermoplastic material is thermoplastic also after form pressing.

Materials that are in thermoplastic form before form pressing, and in at least partly thermoset form after form pressing may include phenol resin, epoxy resin, polyester resin, urea-formaldehyde resin, and melamine resin.

Referring to Fig. 9a, a preform 100 may comprise also a hole 810, 812. Preferably the hole is located a distance apart from the sides of the preform. These sides refers to those side of the preform that are not parallel with the plane of the layers 110 of the preform. In such a case the preform surrounds the hole 810, 812. The hole may run through the preform, i.e. from a first surface to another, opposing surface, as depicted with the reference number 810. Alternatively, the hole may be a pit in a surface of the preform, wherein the hole does not run through the preform as depicted with the reference number 812. Equipment 820, such as magnets, shields (e.g. ballistic shields or electromagnetic shields), and electronic devices may be installed or be installable to the hole. Electronic electronic devices may comprise e.g. at least one of sensors (temperature, humidity, etc.), switches (a galvanic switch, a capacitive switch or an inductive switch), actuators (lamps, light emitting diodes, loudspeakers, etc.), and RF devices (RF transponders, RF receivers, or RF transmitters) . Other materials, such as foams, polymers, or metals, may be used to fill the hole. Other materials may be used to engineer the local properties of the product. E.g. metals may be used to engineer the local electromagnetic properties (e.g. magnetic permeability or dielectric constant) of the product. Polymers and foams may be used to engineer the local mechanical properties (e.g. softness) of the product.

Referring to Figs 2a and 3a, an intermediate product 200 may be made from the preform 100 be removing material. Material may be removed e.g. by at least one of the methods described above. Material may be removed in a first temperature. Material may be removed before or after form pressing. The first temperature refers to a temperature, wherein the thermoplastic material 120 is below its melting point. Therefore, the thermoplastic material is substantially rigid in the first temperature. As the thermoplastic material is rigid, the preform 100 is also rigid. Therefore, the removal of material is easy, as material can be removed from many layers substantially simultaneously. Individual layers need not to be thinned one by one. The first temperature depends on the thermoplastic material 120 of the embodiment. In some embodiments, the thermoplastic material 120 is substantially rigid in a first temperature, wherein the first temperature is from -20 °C to +50 °C, preferably from 15 °C to +35 °C, and more preferably near room temperature. In case material is removed of a form pressed curvilinear preform 102, wherein the thermoplastic material has at least partly cross-linked, the removal of material may be performed also in another temperature then the first temperature. An intermediate product may be made by attaching some material to such an intermediate product as discussed above. For example, a preform may be attached to an intermediate product to make up another intermediate product. For example, an intermediate product may be attached to a preform to make up another intermediate product. For example, an intermediate product may be made by removing material from a first preform, thereby forming a first intermediate product, and attaching the first intermediate product to a second preform, whereby a second intermediate product is formed. Also other materials may be attached to a first intermediate product to form a second intermediate product.

Figures 2a-2c show the process of form pressing the preform 100 of Fig. 2a to form the curvilinear preform 102 of Fig. 2c. Figure 2a shows, in a side view, a preform 100 having layers 110 and thermoplastic material 120. The preform 100 is a planar preform. Figure 2b shows form pressing the preform 100 of Fig. 2a. The preform 100 is heated or has been heated to a second temperature, in which the thermoplastic material 120 is above the melting point. The second temperature is greater than the first temperature. The second temperature may be at least 10 °C greater than the first temperature, preferably at least 20 °C greater than the first temperature, and more preferably at least 50 °C greater than the first temperature.

Materials that are in thermoplastic form before and after form pressing may have a melting point of e.g. from 80 °C to 300 °C.

Materials that are in thermoplastic form before form pressing, and at least partly thermoset form after form pressing may have a melting point from -10 °C to 60 °C (before form pressing). Above the melting point, e.g. above 70 °C, the cross-linking may start and accelerate, and the material may be transformed to an at least partly thermoset material.

The preform 100 (Fig. 2a) or the intermediate product 200 (Fig. 3a) is form pressed the a curvilinear preform 102 (Fig. 2b) or curvilinear intermediate product 202 (Fig. 3b). The form pressing may be performed in a device for form pressing. The device for form pressing comprises an at least partially concave surface 151. (Figs. 2b and 3b). The at least partially concave surface 151 may be arranged on a first body 150. The device further comprises an at least partially convex surface 156. The least partially convex surface 156 may be arranged on a second body 155. The shape of the at least partially concave surface 151 may be adapted to the shape of the at least partially convex surface 156. The preform 100 or the intermediate product 200 is form pressed in between two surfaces 151, 156, whereby the device for form pressing comprises means for pressing the first surface 151 against the second surface 156 with a force. The means may include a hydraulic press or a screw.

Referring to Figs. 4c and 4d, at least one of the first body 150 and the second body 155 of the device may comprise elastic material 152, 157 on the convex or the concave part of the surface. In Fig. 4c, the first body 150 comprises elastic material 152 on the concave surface 151, whereby the elastic material also comprises a concave surface 151. In Fig. 4d, the second body 155 comprises elastic material 157 on the convex surface 156, whereby the elastic material also comprises a convex surface 156. Both surfaces 151, 156 may be surfaces of an elastic material. The elastic material is arranged to deform during form pressing. Therefore, the shape of the surface is arranged to adapt to the shape of the preform or the intermediate product. Preferably the surface that is arranged to be in contact with a surface layer 220 during form pressing (cf. Figs. 5c and 6c) comprises elastic material.

When elastic material is used on a body to arrange a deformable surface 151, 156, the hardness of the elastic material is e.g. in the range from 20 ShA to 95 ShA. Preferably the hardness of the elastic material is in the range from 20 ShA to 80 ShA, and more preferably hardness of the elastic material is in the range from 20 ShA to 50 ShA. The unit ShA refers to the hardness on the Shore scale, type A. The Shore hardness is related to the Young's modulus of the material. Relationships of the form E=[0.0981 (56+7.62336S)]/[0.137505(254-2.54S)] and log₁₀(E)=0.0235S-0.6403, wherein S is the Shore hardness and Y is the Young's modulus (in MPa) have been proposed. Using these equation, the Shore (A) 20 corresponds to the Young's modulus of about 0.67 MPa - 0.73 MPa; the Shore (A) 50 corresponds to the Young's modulus of about 2.5 MPa - 3.5 MPa; the Shore (A) 80 corresponds to the Young's modulus of about 9.3 MPa - 17 MPa; and the Shore (A) 95 corresponds to the Young's modulus of about 39 MPa - 44 MPa.

The elastic material is arranged to deform while pressing the first body 150 against the second body 155 with the force. In this way, a surface of device for form pressing may be adapted to the curvilinear shape of the product.

Another embodiment of the device for form pressing comprises a flexible vessel such as a fluid-proof bag. The vessel may be filled with fluid such as air, steam, and/or water. The wall of the flexible vessel may form the surface 151 or the surface 156. Alternatively, an object may be inserted in between the vessel and the intermediate product or preform that is to be form pressed. In this case, the object may comprise the surface 151 or the surface 156. The object may be e.g. a plate to protect the vessel. The plate may be a metal plate. The metal plate may be located in between a fluid-proof bag and the intermediate product. In this way, at least one of the surfaces 151, 156 is arranged to deform while pressing the first surface 151 against the second surface 156 with the force. In this way, a surface 151, 156 of the device for form pressing may be adapted to the curvilinear shape of the product.

The pressure in the vessel may be e.g. from 0.5 bar to 10 bar above the ambient pressure. In an embodiment steam is used in the vessel, whereby the temperature of the steam defines the pressure of the vessel, at least when the steam is saturated steam. For example, the (absolute) pressure of saturated steam at 148 °C is 4.5 bar; the (absolute) pressure of saturated steam at 162 °C is 6.5 bar; the (absolute) pressure of saturated steam at 173 °C is 8.5 bar; the (absolute) pressure of saturated steam at 184 °C is 11 bar. The absolute pressure of 11 bar correspond to the limit 10 bar above the ambient, discussed above. The vessel may thus be used as a heating element, arranged to heat a preform or an intermediate product. E.g. a hot fluid, such as steam, may be arranged to flow through the vessel or circulate in the vessel. Moreover, the vessel may - in addition or alternatively - be used as a cooling element, arranged to cool a preform or an intermediate product. E.g. a cold fluid, such as air or water, may be arranged to flow through the vessel or circulate in the vessel.

The force, which is used to press the first surface against the other surface, may be selected to be so large that the preform or the intermediate product deforms. However, it is also possible to reduce the required force using low pressure. For example on one of the surfaces low pressure nozzles may be arranged. These low pressure nozzles may be arranged to generate suction, by which the preform or the intermediate product is pulled in contact with the surface. Using this suction, the preform or the intermediate product deforms. The other surface may be pressed against the first surface with a relatively low force. The other surface may be e.g. a surface of a flexible vessel. The low pressure is less than the ambient. For example, the low pressure may be at least 0.25 bar below the ambient. If the ambient pressure is e.g. about 1 bara (the unit bara referring to absolute pressure), the low pressure may be e.g. from 0 bara to 0.75 bara.

The preform 100 or the intermediate product 200 is form pressed in the second temperature.

In case the preform 100 or the intermediate product 200 comprises thermoplastic materials that is in thermoplastic form before and after form pressing, the preform 100 or intermediate product 200 that is to be form pressed may be in a second temperature that is relatively high. The preform 100 or the intermediate product may have the second temperature before form pressing, or the temperature may be increased during form pressing. The relatively high temperature refers to a temperature above the melting point of the thermoplastic material. The relatively high temperature may be e.g. 80 °C, 100 °C, 110 °C, 120 °C, 130 °C, 140 °C, 160 °C, 200 °C, 250 °C, or 300 °C. In an embodiment, the high temperature is from 110 °C to 140 °C. In this way, the thermoplastic material is not rigid before and/or during form pressing. During form pressing, the product may be cooled down to a temperature below the melting point of the thermoplastic material. In this way, the thermoplastic material 120 is rigid after form pressing. The temperature at the end of form pressing may be e.g. at least 10 °C, preferably at least 20 °C and more preferably at least 50 °C lower than the second temperature. The temperature at the end of form pressing may equal the first temperature.

The device for form pressing may be arranged to cool the curvilinear preform 102 or curvilinear intermediate product 202 being form pressed while pressing the first surface 151 against the second surface 156 with the force. During form pressing, the preform 100 or the intermediate product 200 is located in between the first surface 151 and the second surface 156. The device may further comprise a cooling element arranged to remove heat from the curvilinear preform 102 or curvilinear intermediate product 202 or the device for form pressing such that the intermediate product is cooled with said removal of heat. The device for form pressing may be arranged to first heat the preform 100 or the intermediate product 200, e.g. above a melting point, and thereafter to cool down at least one of curvilinear preform 102, curvilinear intermediate product 202, and the final product 300 (Fig. 6d).

In form pressing or before form pressing the preform 100 or intermediate product 200 that is to be form pressed may be in a second temperature, which is an intermediate temperature, in case the preform 100 or the intermediate product 200 comprises thermoplastic materials that is in thermoplastic form before form pressing, but in at least partly thermoset form after form pressing. The intermediate temperature refers to a temperature above the melting point of the thermoplastic material. In this way, the thermoplastic material is not rigid before form pressing. The intermediate temperature may be e.g. 40 °C, 50 °C, 60 °C, or 70 °C. During form pressing, the product may be further heated to start the cross-linking process of the thermoplastic material. In this way, the thermoplastic material transforms to at least partly thermoset material, which is rigid after form pressing.

The device for form pressing may be arranged to heat an intermediate product while pressing the first surface 151 against the second surface 156 with the force, wherein the intermediate product is located in between the first surface 151 and the second surface 156. The device for form pressing may comprise a heating element arranged to generate heat such that the intermediate product is heated with said heat. The device for form pressing may comprise a heating element arranged to heat at least one of the first surface 151, the first body 150, the second surface 156, the second body 155, the elastic material 152, 157, the curvilinear preform 102, the curvilinear intermediate product 202, the preform 100, and the intermediate product 200.

The device for form pressing may be arranged to first heat the intermediate product, e.g. to start the cross-linking of the thermoplastic material, and thereafter to cool down the final product. As the material in between the layers 110 is at least partly thermoset, the final product needs not to be cooled during form pressing. It is also possible to first form press the preform 100 such that the thermoplastic material 110 transforms to at least partly thermoset material in the second temperature. The resulting curvilinear preform 102 is rigid, since the material in between the layers 110 is thermoset. Therefore, material may be removed from the curvilinear, rigid, preform 102 in the second temperature.

The preform 100 or the intermediate product 200 can be heated to the second temperature prior to form pressing or at the same time during form pressing. The melted thermoplastic material 120 allows for sliding of the layers 110 and in this way the bending stiffness of the preform or intermediate product is reduced.

Referring still to Figs. 2a-2d, in an embodiment the (planar) preform 100 is pressed in between two bodies 150 and 155 to produce a curvilinear preform 102. The shape of the tools determine the shape of the curvilinear preform 102. When the preform is cooled below the melting point of the thermoplastic material, or the thermoplastic material is cross-linked to thermoset material, the preform re-gains its stiffness. The curvilinear preform 102 is shown in Fig. 2c.

A preform 100, from which material is removed, is called an "intermediate product" 200. The materials for the preform 100 were discussed above. As the intermediate product 200 is made from the preform 100, the same features apply to the intermediate product 200.

Referring to Figs 10a and 10b, in case the preform 100 comprises the hole, as discussed above, the intermediate product 200 that has been produced from the preform also comprises the hole. Such a hole 810 can be made also directly to the intermediate product. In case the intermediate product 200 comprises the hole 810, equipment 820, such as electronic equipment may be installed or installable to the intermediate product.

In case the intermediate product comprises electronic equipment and the intermediate product is form pressed, the form pressing temperature (i.e. the second temperature) is preferably selected such that the joints of the electronic device do not melt. As examples, joints of the electronic device may comprise solder. Common solders include the Sn-Pb, Au-Sn, Bi-Sn, and In-Sn solder. The melting points of these solders are approximately 183 °C, 280 °C, 138 °C, 118 °C, respectively, and the melting point may slightly differ from the solidifying point. Also the ternary Sn-Ag-Cu with the melting point of 217 °C is becoming increasingly popular. Therefore, the second temperature may be e.g. less than any one of melting points of the solders discussed above. Moreover, a safety margin of e.g. 10 °C may be used. Therefore, the second temperature may be e.g. 10 °C less than any one of melting points of the solders discussed above.

Referring to Figs. 3a-3d, the intermediate product 200 has a non-uniform thickness. Non-uniform thickness means the intermediate product has a first thickness at a first location and a second thickness at a second location, wherein the second thickness is different from the first thickness. Depending on the order of the steps of the method and the phase in the method, the intermediate product 200 may be planar or curvilinear. The intermediate product 200 is planar, when the layers 110 of the intermediate product are planar. A layer 110 is planar, if the radius of curvature is the layer 110 is large, e.g. larger than 10 m. The intermediate product 200 is curvilinear (i.e. a curvilinear intermediate product 202), when at least one of the layers 110 of the curvilinear intermediate product 202 is curvilinear. A layer 110 is curvilinear, if it is not planar. These observation regarding the planarity of the intermediate product 200, 202 apply also to the preform 100, 102.

Figures 3a to 3c show an embodiment for the method of manufacturing a curvilinear intermediate product 202. As shown in Fig. 2d, the curvilinear intermediate product 202 of Fig. 3c can alternatively be produced from the curvilinear preform 102 of Fig. 2c by removing material from the curvilinear preform 102.

Regarding only these steps, the possible processes are:
(1) removing material from the preform 100 to form an intermediate product 200; and form pressing the intermediate product 200 to form a curvilinear intermediate product 202, and
(2) form pressing a preform 100 to form a curvilinear preform 102; and removing material from the curvilinear preform 102 to form a curvilinear intermediate product 202.

Of these processes, the first process (1) is preferred because the order allows for the removal on material from a planar preform 100. As compared to the removal of material from a curvilinear preform 102, the removal of material may be more easily automated. Therefore, the process is faster and more flexible, reducing the overall manufacturing costs. When material is removed from the preform (curvilinear 102 or planar 100) or from the intermediate product (curvilinear 202 or planar 200), traces of removal appear at the areas from which material has been removed. Such an area 210 is shown in Fig. 3a. The traces may be e.g. microscopic scratches.

When the material is removed from a preform 100, 102, or an intermediate product 200, 202 in a single process step, the traces of removal are similarly oriented. As discussed above, preferably the material is removed from a preform 100, whereby an intermediate product 200 is obtained. If the preform is curvilinear, the intermediate product is also curvilinear. However, preferably, the intermediate product 200, 202 is form pressed later, whereby the preform 100 is not form pressed. Therefore, the intermediate product 200, 202 preferably comprises thermoplastic material. Such an intermediate product 200, 202 comprises
- at least two layers 110,
- thermoplastic material 120 in between the two layers,
- a first thickness at a first location,
- a second thickness at a second location, wherein the second thickness is different from the first thickness,
- traces showing the removal of material from at least two adjacent layers, wherein
- the traces on a first layer are oriented in a first direction,
- the traces on a second layer, wherein the second layer is adjacent to the first layer, are oriented in a second direction, and
- the first direction is parallel to the second direction;
wherein the parallel orientation of the traces on the adjacent layers indicates the substantially simultaneous removal of material from the first and the second layer.

If material is removed from a preform 200 before form pressing, the traces are continuous in the intermediate product. In particular, if material is removed from more than one layer, these traces are continuous from one layer to the adjacent layer.

During form pressing the intermediate product 200, the layers slide with respect to each other, and the traces in the curvilinear intermediate product are discontinuous. In particular, in this case the traces are discontinuous from one layer to the adjacent layer. However, the traces may be oriented in the same direction.

If the preform 100 is first form pressed, and material is removed thereafter to form the curvilinear intermediate product 202, these traces are continuous in the curvilinear intermediate product 202. The traces are also oriented in the same direction.

In some embodiments, the area 210, from which material has been removed, is formed on a corner of the intermediate product 200, 202. The area may be formed also in a central part of the intermediate product 200, 202. The removal may be performed essentially one dimensionally, whereby the cross-section of the intermediate product may be essentially similar regardless of the location of the plane of the cross section in the first dimension. E.g. in Figs. 3a and 3d, the cross section of the intermediate product 200 may be substantially similar, when the plane of the cross section is perpendicular to the length L of the intermediate product. The width W of the intermediate product is oriented in the same direction as the width W_{A} of the area 210. The width W_{A} of the area 210 showing traces of removal of material may be e.g. at least 10 mm, preferably at least 15 mm and more preferably at least 20 mm.

In addition or alternatively, the width W_{A} of the area 210 showing trace of removal of material may be related to the thickness H of the intermediate product (here the thickness H refers also to the thickness of the preform, c.f. Fig. 3d). It is noted the thickness of the intermediate product is non-uniform, and less than H at the points comprised by the area 210. Thus H also defines the maximum thickness of the intermediate product 200, 202. In an embodiment, the ratio of the width of the area W_{A} to the maximum thickness H of the intermediate product 200, 202 is at least 1. Preferably, and in some other embodiments, the ratio is at least 3, and more preferably at least 9.

In addition or alternatively, the area 210 may form an angle a with a surface of the intermediate product. As discussed above, the intermediate product 200, 202 has a first thickness at a first location and a second thickness at a second location, wherein the second thickness is different from the first thickness. Without loss of generality, the locations may be selected such that are selected such that the thickness difference between the first thickness and the second thickness is positive. I.e. the intermediate product 200, 202 is thicker at the first location. This is illustrated in Fig. 3d, wherein the intermediate product 200 has a first thickness H₁ at a first location 214 and a second thickness H₂ at a second location 216. It is noted that that first location 214 may be selected also such that the first thickness H₁ equals the maximum thickness H.

It is also evident, that these locations are different, i.e. the second location is located a distance D apart from the first location. In an embodiment, the ratio of the thickness difference to this distance, (H₁-H₂)/D is from 0.08 to 1. If the thickness of the intermediate product in between these locations is continuous, the angle α between the surface from which material has been removed to a surface from which material has not been removed is, at some point between the first location and the second location, from about 5 degrees to 45 degrees. The dependence of the angle on the ratio is evident from Fig. 3d to a person skilled in the art: tan(α)=(H₁-H₂)/D. It is further noted that the locations 214 and 216 are selected such that H₁>H₂.

In Fig. 3d the intermediate product is planar. Therefore the thicknesses H₁ and H₂ are oriented perpendicularly to the plane, and are mutually parallel. Therefore, the distance between the first and the second location is naturally measured in the plane of the interposer.

In case of a curvilinear intermediate product, the distance could be measured along the surface of the area 210. Referring to Fig. 3d, this distance, a distance D₂ (not shown in the figure), would be greater than the distance D. Using Fig. 3d it is evident that for the other distance: sin(α)=(H₁-H₂)/D₂. For small angles sin(α) and tan (α) are approximately the same. In case of a curvilinear intermediate product, the first and second thicknesses of the intermediate product are measured in a direction perpendicular to the surface of the curvilinear interposer. The distance between the two locations is the distance as measured along the surface. Referring to Fig. 3d, this applies also to a planar intermediate product, provided that the direction of thickness is defined from a surface that is parallel to the plane of the planar intermediate product. Referring to Fig. 3d, this surface is the top surface.

In this or another embodiment the ratio of the thickness difference to this distance, (H₁-H₂)/D, is from 0.16 to 0.84, whereby the angle α between an area 210 with continuous thickness and a surface of the intermediate product 200, 202 is from about 10 degrees to 40.

In this or another embodiment the ratio of the thickness difference to this distance, (H₁-H₂)/D, is from 0.27 to 0.70, whereby the angle α between an area 210 with continuous thickness and a surface of the intermediate product 200, 202 is from about 15 degrees to 35 degrees.

In principle, the area 210 can be made by smoothing or by planing down. In this way, the intermediate product comprises at least one sharp angle 212 on its surface. As will be discussed, a solid surface layer may be attached onto the intermediate product. Such sharp angles may complicate the attachment of such a solid surface. Therefore, in a preferred embodiment material is removed such that the intermediate product does not comprise, particularly at the edges of the area 210, sharp angles. Such removal may be performed e.g. by grinding, refining, milling. When the intermediate product does not comprise sharp angles, the radius of curvature of the surface is continuous. At a sharp angle 212, a radius of curvature cannot be defined, and therefore does not exist. Thus the radius of curvature is not continuous, particularly at the sharp angle 212. In an embodiment, the intermediate product 200 comprises an area 210 comprising the traces showing the removal of material, and the radius of curvature of the surface of the intermediate product is continuous also at the boundaries of the area 210.

Referring to Figs. 4a and 4b, in the method, at least one surface layer 220 is arranged on the preform 100, 102 or the intermediate product 200, 202. The surface layer may be formed using a liquid material e.g. by spraying or by brushing, and by solidifying the liquid material (e.g. hardening or drying). In an embodiment, at least one solid surface layer 220 is attached to the curvilinear intermediate product 202 after form pressing as depicted in Figs. 4a and 4b. This results is the final product 300. The product 300 may comprise one surface layer 220, as depicted in Fig. 4a. The product 300 may comprise two surface layers 220, as depicted in Fig. 4b.

It has been noticed that a surface layer 220 can be attached to the preform 100 or to the intermediate product 200
- before form pressing the preform 100 or intermediate product 200,
- during form pressing the preform 100 or intermediate product 200, or
- before and during form pressing the preform 100 or intermediate product 200.

If surface layer 220 is attached both before and during form pressing, it may e.g. be pre-attached before form pressing and fully attached during form pressing.

An embodiment comprises
- arranging the at least one surface layer 220 on at least one side of the preform 100 or the intermediate product 200, and
- attaching the surface layer 220 to the preform 100 or the intermediate product 200 during the form pressing, whereby the surface layer 220 and the preform or intermediate product are pressed to a form at substantially the same time.

The surface layer 220 may be attached to the intermediate product 200 using thermoplastic material 122. However, also other adhesives may be used. Moreover, the thermoplastic material may transform to at least partly thermoset material, e.g. during form pressing. In an embodiment, the adhesive comprises at least 50 % thermoplastic material. Preferably the adhesive comprises at least 70 % thermoplastic material. More preferably the adhesive comprises at least 90 % thermoplastic material.

Figs. 5a to 5e show the manufacturing of the product wherein a solid surface layer 220 is attached to the preform 100 using thermoplastic material 122.

Fig. 5a shows a surface layer 220, thermoplastic material 122, and a preform 100. Fig. 5b shows a surface layer 220 and thermoplastic material 122, which are pre-attached to a preform 100. The surface layer and/or the thermoplastic material 122 may be pre-attached to the preform e.g. with an adhesive. The surface layer and/or the thermoplastic material 122 is not necessarily pre-attached to the preform. In an embodiment, the solid surface layer 220 is arranged onto a preform 100 without pre-attaching. The surface layer 220 remains on the preform 100 e.g. due to gravity. The surface layer 220 may comprise the thermoplastic material 122 as one of its layers. The preform 100 may comprise the thermoplastic material 122 on top of one of its layers 110. The materials may be heated, or they may be otherwise hot. The structure may be form pressed in the second temperature, as discussed above.

During form pressing, the thermoplastic material 122 may cross-link to at least partly thermoset material, as discussed above for the thermoplastic material 120. The reference numeral 123 in Figs. 5c, 5d and 5e is used to indicate a material that is a thermoplastic or at least partly thermoset.

In Fig. 5c the surface layer 220, the thermoplastic or at least partly thermoset material 122/123, and the preform 100 are arranged in between the bodies 150 and 155 of a form pressing device. The surface layer 220, the thermoplastic material 122, and the preform 100 are form pressed whereby the preform 100 is bent to the curvilinear preform 102. Moreover, the thermoplastic material 122 melts or has been melted. In one embodiment, when the structure is cooled, the thermoplastic material 122 solidifies, and the surface layer 220 becomes bonded to the curvilinear preform 102, more precisely to a first side of the preform 102. In another embodiment, when the structure is heated, the thermoplastic material 122 transforms to at least partly thermoset material, and the surface layer 220 becomes bonded to the curvilinear preform 102, more precisely to a first side of the preform 102. The resulting structure is shown in Fig. 5d. Finally, material may be removed from the second side of the preform 102. In this way the product 300 may be manufactured.

Preferably, the surface layer 220 covers at least part of the area 210 having traces of the removal of material from a preform 100. More preferably, a surface layer 220 covers an area 210 having traces of removal of material. Even more preferably, a surface layer 220 covers all the areas 210 having traces of removal of material. This may make the visual appearance of the product 300 more appealing than the visual appearance of the intermediate product 200.

As depicted in Figs. 9c and 10e, in addition to the area 210, the surface layer 220 may cover also the hole 810, 812, and the equipment 820 arranged in the hole. The equipment may comprise e.g. electronic equipment as discussed in connection with the preform.

A preferable embodiment comprises
- arranging the at least one surface layer 220 on at least one side of the intermediate product 200, and
- attaching the surface layer 220 to the intermediate product 200 during the form pressing, whereby the surface layer 220 and the intermediate product are pressed to a form at substantially the same time.

Furthermore, to produce the intermediate product 200, the same or another user of the method may have performed steps comprising
- arranging available a preform 100, and
- removing part of the preform 100 to form the intermediate product 200.

In this case, material can be removed from the (planar) preform 100, which a is more easily controlled process than removing material from a curvilinear preform 102 comprising the surface layer 220 (as indicated with the reference numeral 290 in Fig. 5d).

Figs. 6a - 6d show a preferred embodiment for making the product 300. The intermediate product 200 is arranged available (Figs. 6a and 6b). The intermediate product 200 may be made e.g. from a preform 100 by the removal of material (Figs. 2a and 3a).

Fig. 6a shows a surface layer 220 and thermoplastic material 122, which are pre-attached to an intermediate product 200. The surface layer 220 and/or the thermoplastic material 122 may be pre-attached to the intermediate product 200 e.g. with an adhesive. The surface layer 220 and/or the thermoplastic material 122 is not necessarily pre-attached to the intermediate product. Fig. 6b shows a surface layer 220, thermoplastic material 122, and an intermediate product 200, which are not attached to each other.

In Fig. 6c the surface layer 220, the thermoplastic material 122, and the intermediate product 200 are arranged in between the bodies 150 and 155 of the device for form pressing the intermediate product 200. The surface layer 220, the thermoplastic material 122, and the intermediate product 200 are form pressed, in the second temperature, whereby the intermediate product 200 is bent to the curvilinear intermediate product 202. Moreover, the thermoplastic material 122 melts. When the structure is cooled or cross-linked, the thermoplastic material 122 solidifies or cross-links, and the surface layer 220 becomes bonded to the curvilinear intermediate product 202. The resulting product 300 is shown in Fig. 6d.

It is evident to a person skilled in the art that material can be attached to the product 300. It is evident to a person skilled in the art that the product 300 may form a part of another product. For example, the product 300, as made by the process, may be an armrest of a chair. The rest of the chair may be attached to the armrest, i.e. the product 300. Or conversely, the armrest (product 300) may be attached to a body of a chair.

Figures 7a1-7d2 show, in a side view, some possibilities for manufacturing the product. The preform 100 may or may not have a uniform thickness. Material may be removed from one or two sides of the preform 100 resulting in an intermediate product 200. At least one surface layer 220 may be attached to at least one side of the intermediate product.

Figures 7a1 and 7b1 show preforms 100, from which the manufacturing may start. An intermediate product 200 is obtained from the preform 100 by removing material. Examples of intermediate products 200 are shown in Figs. 7a2, 7b2, 7c2 and 7d2. The intermediate products 200 of Figs. 7a2, 7c2, and 7d2 may be made e.g. from the preform of Fig. 7a1. The intermediate product 200 of Fig. 7b2 may be made e.g. from the preform of Fig. 7b1. One surface layer 220 may be attached to one side of the curvilinear intermediate product 202, as shown in Fig. 7a3. Two surface layer 220 may be attached to the curvilinear intermediate product 202, one surface layer to each surface, as shown in Fig. 7b3. Figures 7a3, 7b3, 7c3 and 7d3 show the product 300. In principle, a single surface layer 220 may also cover both surfaces of the intermediate product 200 (not shown).

The product 300 comprises
- a core comprising at least two layers 110, and at least partly thermoset or thermoplastic material in between the two layers,
- a surface layer 220,
- thermoplastic or at least partially thermoset material 123 in between the surface layer 220 and the core, the product having
- a first thickness at a first location,
- a second thickness at a second location, wherein the second thickness is different from the first thickness, and
- at least one of the layers of the core has at least one finite radius of curvature.

The term "core" here refers to the intermediate product 200 or 202 having been form pressed. However, the intermediate product 200, 202 comprises thermoplastic material 120 in between the layers 110 to allow for the form pressing. The core of the product 300 does not necessarily comprise thermoplastic material, as discussed above. Therefore, the product does not necessarily comprise all the same technical features as the preform 100 or the intermediate product 200.

However, the product 300 inherits many of its features from the preform 100. In particular, the thicknesses of the preform 100, the thickness of the layers 110, and the material of the layers 110 apply also to the core.

In an embodiment the preform 100 and the intermediate product 200 comprises the hole 810, and electronic equipment 820 is arranged in the hole 810 (cf. Figs. 9 and 10). In this embodiment, in the corresponding product 300, the core surrounds the equipment. Moreover, the equipment is covered by the surface layer 220. The hole may be a pit, whereby the core and the surface layer 220 encase the equipment. The hole may run through the core, whereby the equipment may be encased by the surface layer 220, the core, and another surface layer.

The material of the surface layer 220 may also be thermoplastic or at least partly thermoset. Thus, the thermoplastic or at least partially thermoset material 123 may comprise the surface layer 220.

The surface layer 220 may comprise e.g. at least one of glass, metal, fiberglass, carbon fibers, natural fibres, and polymer material.

The properties, e.g. the opaqueness of the flexibility of the surface layer 220 may be selected according to the preferred use. For example, if the visual appearance of a preform 200 is to be improved, the surface layer 220 may be opaque. If the surface layer 220, e.g. a polymer surface layer, is attached to a transparent body, the surface layer may be transparent. Transparent polymers include some acrylates and carbonates. In case the surface layer 220 is attached to a three dimensional intermediate product (Figs. 8a and 8b), the surface layer 220 may be stretchable. In addition, or alternatively, the surface layer 220 may be flexible in two directions. Therefore, in some embodiments, the surface layer comprises at least one of natural fibers, glass, and polymer material. In some embodiments, the surface layer comprises 220 organic natural fibers. This is the case e.g. when the surface layer 220 comprises at least one of wood and paper.

In some embodiments, the surface layer 220 comprises wood and the thickness of the surface layer is from 0.2 mm to 5 mm. In some embodiments, the surface layer 220 has been manufactured by one of rotary cutting, flat slicing, quarter slicing, half-round slicing, and rift cutting. In an embodiment, the surface layer has been manufactured by of rotary cutting.

In case the surface layer 220 comprises other materials than wood, the thickness may be smaller. The thickness of the surface layer 220 may be e.g. from 10 µm to 5 mm.

The surface layer may also be a 3D veneer. A 3D veneer comprises a wooden layer and a support layer. A traditional veneer is flexible in one orientation, in an orientation perpendicular to the fiber orientation. In a 3D veneer, the wooden layer is attached to a flexible support layer, and the veneer is bent in an orientation parallel to the fiber orientation, thereby breaking the fibers. The bending may be done using a roll with a relatively small diameter. The rotational axis of the roll is arranged perpendicularly to the fibre orientation of the veneer. After breaking the fibers in this way, the 3D veneer is flexible both parallel and perpendicular to the fiber orientation.

In a preferred embodiment the surface layer comprises wood. In a preferred embodiment the product 300 comprises a core that comprises plywood that comprises thermoplastic material, and the product 300 further comprises the surface layer 220 that comprises wood. The surface layer may be attached to the plywood core using an adhesive, e.g. thermoplastic material.

If a solid surface layer 220 is attached to the preform 100, 102 or to the intermediate product 200, 202, any adhesive may be used. The adhesive may be thermoplastic material 122, at least before form pressing. The thermoplastic material 122 may comprise at least one of polyolefin, lignin, polyethylene, phenol resin, epoxy resin, and melamine resin.

The product 300 may further comprise an area 210 comprising traces showing the removal of material from at least two adjacent layers, however, the area 210 may be covered with the surface layer 220 and adhesive. At least part of the area 210 may be exposable by the removal of at least part of the surface layer 220 and at least part of the thermoplastic or thermoset material 123 in between the surface layer and the core. In the area 210, the traces on a first layer 110 are oriented in a first direction and the traces on a second layer 110 are oriented in a second direction. The second layer 110 is adjacent to the first layer 110. The first direction is parallel to the second direction.

As discussed, the intermediate product 200 comprises the area 210 showing traces of removal of material. In the final product 300, this area 210 may be covered with the surface layer 220. Referring to Fig. 7a1 - 7d3, the surface layer may have an essentially uniform thickness. Therefore, the thickness variation, as discussed above for the intermediate product, may apply also for the product 300. The product 300 has a maximum thickness. Since the area 210 of the intermediate product 200 shows traces of removal of material, and the surface layer 220 may have a uniform thickness, the product 300 may comprise an area, wherein the thickness of the product at all points of the area is less than the maximum thickness. This area may be the area of the surface layer 220 at the points that cover the area 210.

The removal of material from the preform 100 may have been performed essentially one dimensionally, whereby the cross-section of the product 300 may be essentially similar regardless of the location of the plane of the cross section in the first dimension. E.g. in Figs. 7a3-7d3, the cross section of the product 300 may be substantially similar, when the plane of the cross section is perpendicular to the length of the product.

The width W_{AP} (Fig. 7b3) of the area, wherein the thickness at all points of the area is less than the maximum thickness, may be e.g. at least 10 mm, preferably at least 15 mm and more preferably at least 20 mm.

As discussed for the intermediate product 200, the width W_{AP} may also depend on the thickness of the product 300. The ratio of the width of the area, wherein the thickness at all points of the area is less than the maximum thickness, to the maximum thickness of the product 300 may be e.g. at least 1. Preferably, and in some other embodiments, the ratio is at least 3, and more preferably at least 9.

Still further, because of the removal of material, the opposing surfaces of the product are not necessarily oriented in the same direction. Therefore, there may be an angle between the opposing surfaces of the product 300; in particular at the location, from which material has been removed. As the surface layer may have a uniform thickness, this angle may be equal to the angle α (Fig. 3d) discussed above for the intermediate product 200.

The product 300 may have a maximum thickness and an area, wherein the thickness at all points of the area is less than the maximum thickness. This area may comprise a first location and a second location, wherein the product has a first thickness at a first location and a second thickness at a second location. The second thickness is different from the first thickness, unless material is removed from the preform 100 such that a step with a uniform thickness is formed. The first location and the second location may be selected such that the thickness difference between the first thickness and the second thickness is positive (H₁>H₂, Fig. 3d. However, H₁ and H₂ refer to the thickness of the intermediate product 200). The second location is located a distance apart from the first location.

In an embodiment, the ratio of the thickness difference to this distance is from 0.08 to 1. If the thickness of the intermediate product in between these locations is continuous, the angle between a first surface of the product and the second, opposing, surface of the product is, at some point between the first location and the second location, from about 5 degrees to 45 degrees.

In this or another embodiment the ratio of the thickness difference to this distance is from 0.16 to 0.84, whereby the angle between a first surface of the product and the second, opposing, surface of the product is, at some point between the first location and the second location, from about 10 degrees to 40 degrees.

In this or another embodiment the ratio of the thickness difference to this distance is from 0.27 to 0.70, whereby the angle between a first surface of the product and the second, opposing, surface of the product is, at some point between the first location and the second location, from about 10 degrees to 35 degrees.

The product 300 may be used in various applications. The materials of
- the preform 100, 102 or intermediate product 200, 202
- the surface layer 220, and
- the layer between the surface layers 220 and the core,
may be selected according to the application.

Applications include:
- furniture such as chairs, tables, sofas, seats,
- profiles such as railings, handrails, chutes, grooves, molds e.g. for molding, cleats, frames, e.g. for windows and doors,
- panels for indoor and outdoor use, e.g. doors and windows such as safety glasses,
- lighting devices and parts of thereof, e.g. base, body, or shade,
- sports equipment such as boards (skateboards, surfing boards, skim boards, wake boards, and snow boards), skies (downhill and cross country), and other equipment such as clubs, sticks, bats and racquets,
- music instruments, such as drums, string instruments (violins, violas, cellos, contrabassi), guitars and basses,
- loudspeakers, e.g. housings thereof,
- car parts, e.g. control panels,
- housings of various equipment,
- components for energy production, such as wings of wind mills,
- paddles or sculls,
- tools, e.g. gardening tools, especially gardening tools having stiff teeth such as rakes.

Figures 8a and 8b show, in a perspective view, some other possibilities for the intermediate product 200. Figure 8a shows the intermediate product 200, wherein a hole has been grinded into a preform, thereby removing material from the preform, to form the intermediate product. The hole of Fig. 8a is flat, and is therefore not used as the hole for the equipment. The area 210, from which material has been removed is also shown in the figure. The area 210 shows traces of removal of the material as discussed above. Figure 8b shows the intermediate product 200, wherein a part of the preform has been grinded from the preform, thereby removing material from the preform, to make the intermediate product. The area 210, from which material has been removed is also shown in the figure. The area 210 shows traces of removal of the material as discussed above.

It is also noted, that an embodiment of the product has essentially uniform thickness. In this embodiment, some material or equipment 820 is arranged in the product as discussed above.

The embodiment of the product 300 comprises
- a core comprising at least two layers 110, and at least partly thermoset or thermoplastic material in between the two layers,
- a surface layer 220,
- thermoplastic or at least partially thermoset material 123 in between the surface layer 220 and the core, and
- material or equipment 820 arranged in the product such that the core surrounds the equipment.

Alternatives for the material and the equipment 820 were discussed above.

Preferably, the equipment 820 is covered, at least on one side, by the surface layer 220. In Figs. 9b and 9c the equipment 820 is covered on one side by the surface layer 220. In contrast, in Figs. 10d and 10e the equipment 820 is covered on two sides by the surface layer 220. Also preferably, at least one of the layers of the core has at least one finite radius of curvature. The property "at least one finite radius of curvature" means that the product may be mostly planar, but still having curvilinear parts, e.g. curvilinear boundaries.

Referring to Figs. 9a to 9c, such a product may be manufactured by
- arranging available a preform 100 (Fig. 9a),
- arranging at least one hole 810 into the preform, wherein the hole 810 may be a through hole 810 or a pit 812,
- arranging equipment 820 and/or material into the hole
- optionally filling the hole with a filler such a polymer or a foam,
- arranging a surface layer 220 onto the preform, preferably such that the surface layer 220 covers the hole 810, 812, and
- form pressing the preform between two surfaces (Fig. 9b).

It is evident that the properties discussed in connection with the preform above apply also to the preform 100 of Figs. 9a to 9c. Referring to Fig. 9c, the product may thus also have a uniform thickness.

Preferably, as shown in Fig. 9c, the product comprises the material or the equipment 820 at least in a location, wherein the location is beneath the surface layer 220 in a point, wherein the radius of curvature of the surface at that point is relatively small. The term relatively small refers to a radius of curvature of at most 2 m, preferably at most 1 m. and more preferably at most 50 cm. The radius of curvature may be even less, e.g. at most 20 cm or at most 10 cm. Alternatively or in addition, the product may comprise the material or the equipment (e.g. the equipment 820b) in a location, wherein the location is beneath the surface layer 220 in a point, wherein the radius of curvature of the surface at that point is relatively large.

Even more preferably, when the material or the equipment 820 is arranged in the location, wherein the location is beneath a set of points the surface layer 220, the radius of curvature of the surface is relatively small for all the points that belong to the set of points.

The set of points also defines an area, beneath which the material or the equipment is located. The area comprises a boundary. Preferably the material or the equipment is located such that the surface normal of the surface layer changes along the boundary of the area. This means that the product is curvilinear at least outside of the area. Moreover, this means that the product is curvilinear at least immediately outside of the area

As the local properties of the product may be engineered with the material, the material may be different from the other materials of the product. E.g. the material may consist of a first material. The first material may be different from at least one of
- the material of the layer 110,
- the thermoplastic material 120,
- the thermoplastic material 120 that has been at least partly thermoset,
- the material the surface layer 220,
- the adhesive (122, 123) between the surface layer and the core, and
- the material of the core.

Furthermore, the material may comprise at least a first material and a second material. In this case, the first material may be different from all of
- the material of the layer 110,
- the thermoplastic material 120,
- the thermoplastic material 120 that has been at least partly thermoset,
- the material the surface layer 220, and
- the adhesive (122, 123) between the surface layer and the core.

It is noted that the core may consists of the material of the layer 110 and one of the thermoplastic material 120 and the thermoplastic material 120 that has been at least partly thermoset.

Moreover, the material or the equipment may be relatively thin. For thin equipment or material, a hole is not necessarily needed. Such a product may be manufactured by
- arranging available a preform 100,
- arranging equipment 820 and/or material onto the preform,
- arranging a surface layer 220 onto the preform, preferably such that the surface layer 220 covers the equipment 820 and/or material,
- form pressing the preform between two surfaces.

In such a product, the equipment or the material is arranged in the product such that the surface layer covers the material or the equipment.

However, as discussed above, the product may also have a non-uniform thickness. Referring to Figs. 10a to 10e, such a product may be manufactured by
- arranging available a preform 100 (Fig. 10a),
- optionally arranging at least one hole 810 into the preform, wherein the hole 810 may be a through hole 810 or a pit 812 (Fig. 10b),
- removing material from the preform such that the thickness of the intermediate product 200 in non-uniform (Fig. 10c),
- optionally arranging at least one hole 810 into the intermediate product 200, wherein the hole 810 may be a through hole 810 or a pit 812 (Fig. 10c),
- arranging equipment 820 and/or material into the hole (Fig. 10c),
- optionally filling the hole with a filler such a polymer or a foam,
- arranging a first surface layer 220 onto the intermediate product 200, preferably such that the surface layer 220 covers a hole 810, 812,
- arranging a second surface layer 220 onto the intermediate product 200, preferably such that the surface layer 220 covers a hole 810, 812, and
- form pressing the preform between two surfaces (Fig. 10d).

It is evident, that also a product having a uniform thickness may comprise two surface layers. It is evident, that also a product having a non-uniform thickness may comprise only one surface layer.

The following examples summarize some of the technical features of the method, intermediate product, product, and the device for form pressing, as discussed above.

In the following, the term "from pressed preform" refers to a curvilinear preform 102 that has been made using a preform 100 or a curvilinear preform by form pressing.

In the following, the term "from pressed intermediate product" refers to a curvilinear intermediate product 202, that has been made by
- removing material from a preform 100 to form an intermediate product 200, and form pressing the intermediate product, or
- forming a form pressed preform, and removing material from the from pressed preform to make the form pressed intermediate product.

These clarification are made, since the preform 100 may be curvilinear also before form pressing. Therefore, the intermediate product 200 may also be curvilinear before form pressing.

## Claims

1. A method for producing a curvilinear layered product (300) having a non-uniform thickness (H, H₁, H₂), the method comprising, in some order,
- arranging available a preform (100, 102) having a first thickness (H, H₁) at a first location (214), wherein the preform (100, 102) comprises at least two layers (110) and thermoplastic material (120) in between the two layers (110), the thermoplastic material (120) having a melting point of at least 80 °C and less than 140 °C,
- at a first temperature where the temperature of the thermoplastic material (120) is below its melting point, removing part of the preform (100) or a form pressed preform (102) to form an intermediate product (200, 202) having a second thickness (H₁, H₂) at a second location (216), wherein the second thickness (H₁, H₂) is smaller than the first thickness (H, H₁),
- at a second temperature, form pressing the intermediate product (200) or the preform (100), wherein the second temperature is greater than the first temperature, and
- arranging at least one surface layer (220) onto one of the preform (100), the form pressed preform (102), the intermediate product (200), and the form pressed intermediate product (202).

2. The method of claim 1, comprising
- removing part of the preform (100, 102) to form the intermediate product (200, 202),
- arranging the at least one surface layer (220) on at least one side of the intermediate product (200, 202), and
- attaching the surface layer (220) to the intermediate product (200, 202) during the form pressing process.

3. The method of claim 2, comprising
- using adhesive to attach the surface layer (220) to the intermediate product wherein
- the adhesive material comprises thermoplastic material (122).

4. The method of any of the claims 1 to 3, wherein
- at least one layer (110) of the preform (100, 102) comprises at least one of natural fibers, glass, and polymer material.

5. The method of claim 4, wherein
- at least one layer (110) of the preform (100, 102) comprises organic natural fibers.

6. The method of claim 5, wherein
- at least one layer (110) of the preform (100, 102) comprises wood and
- the thickness of a layer that comprises wood is from 0.2 mm to 5 mm.

7. The method of any of the claims 1 to 6, wherein
- the thickness (H, H₁, H₂) of the preform (100, 102) is at most 100 mm.

8. A product (300) comprising,
- a core comprising
- - at least two layers (110), wherein
- - at least one of the layers (110) of the core has at least one finite radius of curvature, the product (300) further comprising
- a surface layer (220),
- thermoplastic (122) or at least partially thermoset material in between the surface layer (220) and the core, the product having
- a first thickness (H, H₁, H₂) at a first location (214), and
- a second thickness (H₁, H₂, H) at a second location (216), wherein
- the second thickness (H₁, H₂, H) is different from the first thickness (H, H₁, H₂),
wherein
- the core comprises thermoplastic material (120) in between the two layers (110); whereby
- the product (300) can be form pressed when the thermoplastic material (120) of the core is melted,
- the melting point of the thermoplastic material (120) of the core is at least 80 °C and less than 140 °C, and
- the product (300) is rigid at a first temperature at which material can be removed and at which the temperature of the thermoplastic material (120) of the core is below its melting point.

9. The product (300) of claim 8, wherein
- the surface layer (220) comprises wood and
- the thickness of the surface layer (220) is from 0.2 mm to 5 mm.

10. The product (300) of claim 8 or 9, having a maximum thickness (H) and comprising
- an area (210), wherein the thickness (H₁, H₂) of the product (300) at all points of the area (210) is less than the maximum thickness (H), and
- the width (W_{A}) of the area (210) is at least 10 mm.

11. The product (300) of any of the claims 8 to 10, having a maximum thickness (H) and comprising
- an area (210), wherein the thickness (H₁, H₂) of the product (300) at all points of the area (210) is less than the maximum thickness (H), wherein
- the area (210) comprises the first location (214) and the second location (216),
- the first location (216) and the second location (216) are selected such that the thickness difference (H₁-H₂) between the first thickness (H₁) and the second thickness (H₂) is positive,
- the second location (216) is located a distance (D) apart from the first location (214), and
- the ratio ((H₁-H₂)/D) of the thickness difference (H₁-H₂) to the distance (D) is from 0.08 to 1.

12. The product (300) of any of the claims 8 to 11, comprising
- material that is different from the material of the core, or equipment, such as electronic equipment, wherein the electronic equipment comprises at least one of a sensor, a switch, an actuator, and a transponder,
- the core is arranged to surround the material or the equipment, and
- the material or the equipment is covered by the surface layer (220).

## Patentansprüche

1. Verfahren zur Herstellung eines kurvenförmigen Schichtprodukts (300) mit einer ungleichmäßigen Dicke (H, H₁, H₂), wobei das Verfahren Folgendes in einer gewissen Reihenfolge umfasst,
- Verfügbarmachen eines Vorformlings (100, 102) mit einer ersten Dicke (H, H₁) an einer ersten Stelle (214), wobei der Vorformling (100, 102) mindestens zwei Schichten (110) und thermoplastisches Material (120) zwischen den zwei Schichten (110) umfasst, wobei das thermoplastische Material (120) einen Schmelzpunkt von mindestens 80 °C und weniger als 140 °C aufweist,
- bei einer ersten Temperatur, bei der die Temperatur des thermoplastischen Materials (120) unter seinem Schmelzpunkt liegt, Entfernen eines Teils des Vorformlings (100) oder eines formgepressten Vorformlings (102), um ein Zwischenprodukt (200, 202) mit einer zweiten Dicke (H₁, H₂) an einer zweiten Stelle (216) zu bilden, wobei die zweite Dicke (H₁, H₂) geringer als die erste Dicke (H, H₁) ist,
- bei einer zweiten Temperatur Formpressen des Zwischenprodukts (200) oder des Vorformlings (100), wobei die zweite Temperatur höher als die erste Temperatur ist, und
- Anordnen mindestens einer Oberflächenschicht (220) auf den Vorformling (100), den formgepressten Vorformling (102), das Zwischenprodukt (200) oder das formgepresste Zwischenprodukt (202).

2. Verfahren nach Anspruch 1, das Folgendes umfasst:
- Entfernen eines Teils des Vorformlings (100, 102), um das Zwischenprodukt (200, 202) zu bilden,
- Anordnen der mindestens einen Oberflächenschicht (220) auf mindestens einer Seite des Zwischenprodukts (200, 202) und
- Anbringen der Oberflächenschicht (220) an dem Zwischenprodukt (200, 202) während des Formpressvorgangs.

3. Verfahren nach Anspruch 2, das Folgendes umfasst
- Verwenden von Klebstoff, um die Oberflächenschicht (220) an dem Zwischenprodukt anzubringen, wobei
- das Klebstoffmaterial thermoplastisches Material (122) umfasst.

4. Verfahren nach einem der Ansprüche 1 bis 3, wobei
- mindestens eine Schicht (110) des Vorformlings (100, 102) Naturfasern, Glas und/oder Polymermaterial umfasst.

5. Verfahren nach Anspruch 4, wobei
- mindestens eine Schicht (110) des Vorformlings (100, 102) organische Naturfasern umfasst.

6. Verfahren nach Anspruch 5, wobei
- mindestens eine Schicht (110) des Vorformlings (100, 102) Holz umfasst und
- die Dicke einer Schicht, die Holz umfasst, von 0,2 mm bis 5 mm beträgt.

7. Verfahren nach einem der Ansprüche 1 bis 6, wobei
- die Dicke (H, H₁, H₂) des Vorformlings (100, 102) höchstens 100 mm beträgt.

8. Produkt (300), das Folgendes umfasst,
- einen Kern, der Folgendes umfasst
-- mindestens zwei Schichten (110), wobei
-- mindestens eine der Schichten (110) des Kerns mindestens einen endlichen Krümmungsradius hat, wobei das Produkt (300) weiterhin Folgendes umfasst:
- eine Oberflächenschicht (220),
- thermoplastisches (122) oder zumindest zum Teil duroplastisches Material zwischen der Oberflächenschicht (220) und dem Kern, wobei das Produkt Folgendes hat:
- eine erste Dicke (H, H₁, H₂) an einer ersten Stelle (214) und
- eine zweite Dicke (H₁, H₂, H) an einer zweiten Stelle (216), wobei
- die zweite Dicke (H₁, H₂, H) sich von der ersten Dicke (H, H₁, H₂) unterscheidet,
wobei
- der Kern thermoplastisches Material (120) zwischen den zwei Schichten (110) umfasst; wobei
- das Produkt (300) formgepresst werden kann, wenn das thermoplastische Material (120) des Kerns geschmolzen wird,
- der Schmelzpunkt des thermoplastischen Materials (120) des Kerns mindestens 80 °C und weniger als 140 °C beträgt und
- das Produkt (300) bei einer ersten Temperatur, bei der Material entfernt werden kann und bei der die Temperatur des thermoplastischen Materials (120) des Kerns unter seinem Schmelzpunkt liegt, starr ist.

9. Produkt (300) nach Anspruch 8, wobei
- die Oberflächenschicht (220) Holz umfasst und
- die Dicke der Oberflächenschicht (220) von 0,2 mm bis 5 mm beträgt.

10. Produkt (300) nach Anspruch 8 oder 9, das eine maximale Dicke (H) hat und Folgendes umfasst:
- einen Bereich (210), wobei die Dicke (H₁, H₂) des Produkts (300) an allen Punkten des Bereichs (210) geringer als die maximale Dicke (H) ist, und
- die Breite (W_{A}) des Bereichs (210) mindestens 10 mm beträgt.

11. Produkt (300) nach einem der Ansprüche 8 bis 10, das eine maximale Dicke (H) hat und Folgendes umfasst
- einen Bereich (210), wobei die Dicke (H₁, H₂) des Produkts (300) an allen Punkten des Bereichs (210) geringer als die maximale Dicke (H) ist, wobei
- der Bereich (210) die erste Stelle (214) und die zweite Stelle (216) umfasst,
- die erste Stelle (216) und die zweite Stelle (216) derart ausgewählt sind, dass die Dickendifferenz (H₁ - H₂) zwischen der ersten Dicke (H₁) und der zweiten Dicke (H₂) positiv ist,
- die zweite Stelle (216) sich in einem Abstand (D) von der ersten Stelle (214) befindet und
- das Verhältnis ((H₁ - H₂) / D) der Dickendifferenz (H₁ - H₂) zu dem Abstand (D) von 0,08 bis 1 beträgt.

12. Produkt (300) nach einem der Ansprüche 8 bis 11, das Folgendes umfasst
- Material, das sich von dem Material des Kerns unterscheidet, oder eine Ausrüstung, wie eine elektronische Ausrüstung, wobei die elektronische Ausrüstung einen Sensor, einen Schalter, einen Aktor und/oder einen Transponder umfasst,
- wobei der Kern angeordnet ist, um das Material oder die Ausrüstung zu umschließen, und
- das Material oder die Ausrüstung von der Oberflächenschicht (220) bedeckt wird.

## Revendications

1. Procédé de production d'un produit stratifié curviligne (300) ayant une épaisseur non uniforme (H, H₁, H₂), le procédé comprenant les étapes suivantes, dans un certain ordre,
- la mise à disposition d'une préforme (100, 102) ayant une première épaisseur (H, H₁) à un premier endroit (214), la préforme (100, 102) comprenant au moins deux couches (110) et un matériau thermoplastique (120) situé entre les deux couches (110), le matériau thermoplastique (120) ayant un point de fusion d'au moins 80 °C et inférieur à 140 °C,
- à une première température à laquelle la température du matériau thermoplastique (120) est inférieure à son point de fusion, l'élimination d'une partie de la préforme (100) ou d'une préforme moulée par pression (102) pour former un produit intermédiaire (200, 202) ayant une seconde épaisseur (H₁, H₂) à un second endroit (216), la seconde épaisseur (H₁, H₂) étant plus faible que la première épaisseur (H, H₁).
- à une seconde température, le moulage par pression du produit intermédiaire (200) ou de la préforme (100), la seconde température étant supérieure à la première température, et
- la disposition d'au moins une couche de surface (220) sur la préforme (100), ou sur la préforme moulée par pression (102), ou sur le produit intermédiaire (200), ou sur le produit intermédiaire moulé par pression (202).

2. Procédé de la revendication 1, comprenant
- l'élimination d'une partie de la préforme (100, 102) pour former le produit intermédiaire (200, 202),
- la disposition de ladite au moins une couche de surface (220) sur au moins un côté du produit intermédiaire (200, 202), et
- la fixation de la couche de surface (220) au produit intermédiaire (200, 202) pendant le processus de moulage par pression.

3. Procédé de la revendication 2, comprenant
- l'utilisation d'un adhésif pour fixer la couche de surface (220) au produit intermédiaire, dans lequel
- le matériau adhésif comprend un matériau thermoplastique (122).

4. Procédé de n'importe lesquelles des revendications 1 à 3, dans lequel
- au moins une couche (110) de la préforme (100, 102) comprend des fibres naturelles et/ou du verre et/ou un matériau polymère.

5. Procédé de la revendication 4, dans lequel
- au moins une couche (110) de la préforme (100, 102) comprend des fibres naturelles organiques.

6. Procédé de la revendication 5, dans lequel
- au moins une couche (110) de la préforme (100, 102) comprend du bois et
- l'épaisseur d'une couche qui comprend du bois est comprise entre 0,2 mm et 5 mm.

7. Procédé de n'importe lesquelles des revendications 1 à 6, dans lequel
- l'épaisseur (H, H₁, H₂) de la préforme (100, 102) est de 100 mm au plus.

8. Produit (300) comprenant,
- un coeur comprenant
-- au moins deux couches (110), dans lesquelles
-- au moins une des couches (110) du coeur possède au moins un rayon de courbure fini, le produit (300) comprenant en outre
- une couche de surface (220),
- un matériau thermoplastique (122) ou un matériau au moins partiellement thermodurci situé entre la couche de surface (220) et le coeur, le produit ayant
- une première épaisseur (H, H₁, H₂) à un premier endroit (214), et
- une seconde épaisseur (H₁, H₂, H) à un second endroit (216), dans lequel
- la seconde épaisseur (H₁, H₂, H) est différente de la première épaisseur (H, H₁, H₂),
dans lequel
- le coeur comprend un matériau thermoplastique (120) situé entre les deux couches (110) ; grâce à quoi
- le produit (300) peut être moulé par pression lorsque le matériau thermoplastique (120) du coeur est fondu,
- le point de fusion du matériau thermoplastique (120) du coeur est d'au moins 80 °C et inférieur à 140 °C, et
- le produit (300) est rigide à une première température à laquelle du matériau peut être éliminé et à laquelle la température du matériau thermoplastique (120) du coeur est inférieure à son point de fusion.

9. Produit (300) de la revendication 8, dans lequel
- la couche de surface (220) comprend du bois et
- l'épaisseur de la couche de surface (220) est comprise entre 0,2 mm et 5 mm.

10. Produit (300) de la revendication 8 ou 9, ayant une épaisseur maximale (H) et comprenant
- une zone (210), où l'épaisseur (H₁, H₂) du produit (300) en tous points de la zone (210) est inférieure à l'épaisseur maximale (H), et
- la largeur (W_{A}) de la zone (210) est d'au moins 10 mm.

11. Produit (300) de n'importe lesquelles des revendications 8 à 10, ayant une épaisseur maximale (H) et comprenant
- une zone (210), dans laquelle l'épaisseur (H₁, H₂) du produit (300) en tous points de la zone (210) est inférieure à l'épaisseur maximale (H), où
- la zone (210) comprend le premier endroit (214) et le second endroit (216),
- le premier endroit (216) et le second endroit (216) sont choisis de façon à ce que la différence d'épaisseur (H₁-H₂) entre la première épaisseur (H₁) et la seconde épaisseur (H₂) soit positive,
- le second endroit (216) se trouve à une distance (D) du premier endroit (214), et
- le rapport ((H₁-H₂)/D) de la différence d'épaisseur (H₁-H₂) à la distance (D) est compris entre 0,08 et 1.

12. Produit (300) de n'importe lesquelles des revendications 8 à 11, comprenant
- un matériau qui est différent du matériau du coeur, ou un matériel, tel qu'un matériel électronique, le matériel électronique comprenant un capteur et/ou un commutateur et/ou un actionneur et/ou un transpondeur,
- le coeur étant disposé de manière à entourer le matériau ou le matériel, et
- le matériau ou le matériel étant recouvert de la couche de surface (220).
